# EUROPEAN PATENT APPLICATION

(11) **EP 3 968 174 A1**
(43) Date of publication of application: **16.03.2022**
(21) Application number: 20305996.9
(22) Date of filing: 09.09.2020
(51) Int. Cl.: G06F 16/2457, G06F 16/901, G06Q 10/04, H04L 12/701

(54) **DYNAMIC DATABASE QUERY PROCESSING**

(71) Applicant: Amadeus S.A.S., 06410 Biot (FR)
(72) Inventor: AYMARD, Marine Lucie, 06410 Biot (FR); CHENEVOTOT, Sebastien, 06410 Biot (FR); GOTTI, Lionel, 06410 Biot (FR); MYTYCH, Francois-Joseph, 06410 Biot (FR); HENNION, Florian, 06410 Biot (FR); AMADIEU, Olivier, 06410 Biot (FR)
(74) Representative: Samson & Partner Patentanwälte mbB

(57) **Abstract**

A computation engine dynamically computes results in response to a database request indicating at least one search parameter. The computation engine determines, based on an initial result database, an initial incomplete result set with a number of results which include static data pieces that correspond to the at least one search parameter; computes at least one dynamic data piece for each result in the initial incomplete result set based on a number of dynamic computation rules, thereby obtaining an intermediate completed result set, wherein each result of the inter-mediate completed result set includes the at least one static data piece and the computed at least one dynamic data piece; computes an adjustment of the at least one dynamic data piece for at least a sub-set of the intermediate completed result set based on a number of adjustment computation rules, thereby obtaining a finalized completed result set; and returns at least a subset of the finalized completed result set to the client.

## Description

### FIELD

The present disclosure generally relates to processing database requests in a database system. More specifically, it relates to dynamically computing results in response to database requests performed by a computation engine.

### BACKGROUND

A general challenge in database systems are so-called open database requests which specify only a small number of search parameters and/or broad parameter value ranges. Processing such requests and compiling responses to such requests puts significant load on a database server as the number of responses which fulfil the search parameters is large and potentially requires look-up of a correspondingly large amount of data.

In addition, preparing responses to database requests may also entail dynamically computing current parameters values to determine response records based on rules and underlying basic data. Such dynamic computing is generally most expensive in terms of computation resources and response times than simple retrievals of database records from a database.

Hence, there is a general need for efficient mechanisms to process database requests which might involve look-up of large amounts of data and/or dynamically computing response data based on rules.

### SUMMARY

In this context, a dynamic processing method of database queries is presented. The method includes a database storing data with at least one parameter and an (extern) calculation engine which can interact with the database. The method comprises at the database system: in response to receiving a first query input comprising a search parameter specifying a set of data to be retrieved, returning a first set of static data which include the requested parameter; the dynamic processing starts evaluating the static data and updates the data; in response to this update, the computation engine again evaluates the current dynamic data again and updates the data if there is an available update otherwise the current dynamic data is returned.

Furthermore, a computation engine is presented which is arranged to perform the aforementioned functionality.

Moreover, a computer program is presented, the execution of which causes a computer to perform the aforementioned functionality.

Further aspects are apparent from the subsequent description.

### BRIEF DESCRIPTION OF THE FIGURES

Aspects and examples of the present disclosure are described with reference to the following figures, in which:
FIG. 1 shows an architecture of a database system in a schematic manner.
FIG. 2 is a message sequence chart for processing a database request at a higher level of abstraction, while FIG. 3 is a message chart showing more details of an implementation variant.
FIG. 4 relates to an exemplary use case (network routing) of the methodologies described herein.
FIGS. 5 and 6 show simplified database examples for the network routing use case.
FIG. 7 depicts an internal structure of a computation engine.

### DETAILED DESCRIPTION

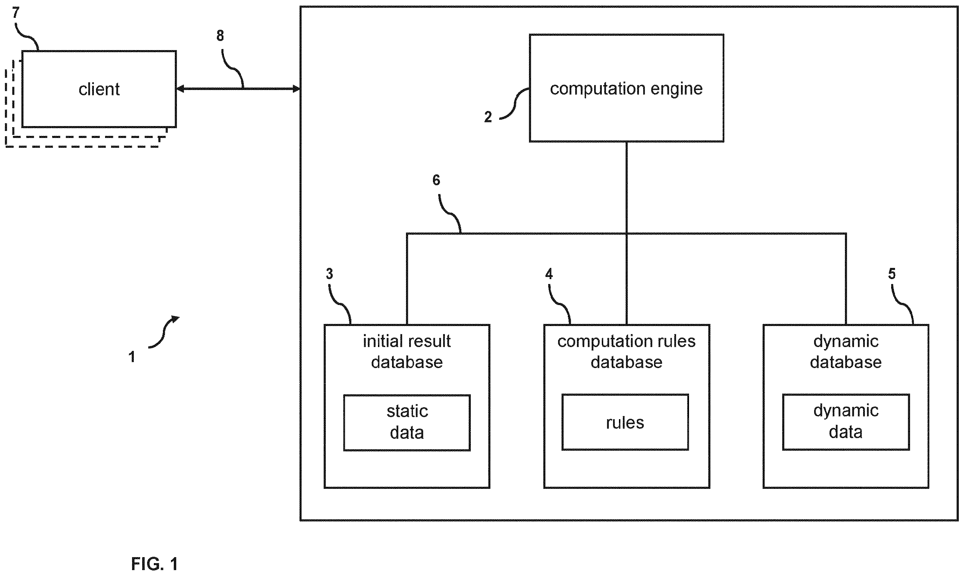

The present disclosure relates to dynamically processing a database requests. A schematic view of the database system 1 is given by FIG. 1.

The database system 1 includes a collection of server-side elements, notably a computation engine 2. The computation engine 2 is communicatively coupled with one or more clients 7 by way of a client-side communication interface 8. The communication interface 8 may be a wired and/or wireless as well as a local or remote networked connection such as a connection via the Internet. A part of the communication interface 8 may be implemented by way of a mobile communication network such as a 3G/4G/5G network according to ETSI/3GPP specifications and/or a WiFi/WLAN network according to IEEE specifications.

The computation engine 2 is arranged to receive and process database requests from the one or more clients 7. More specifically, the computation engine 2 computes database responses which fulfils at least one search parameter, usually multiple search parameters indicated in the database requests, based on data records and rules stored by databases 3, 4, 5 of the database system 1. The computation engine 2 is communicatively coupled via database-side communication interface 6. The database-side communication interface 6 may utilize a local area network and/or wide-area networks such as the Internet, but also the aforementioned communication technologies such as a 3G/4G/5G network and/or a WiFi/WLAN network.

Generally, the database requests and the data stored by the databases 3, 4, 5 of the database system 1 may relate to any type of content. The methodologies described herein generally apply to any content stored by the database system 1 and sought by the database requests. Some exemplary use cases such as a network routing database system and network routing requests are set forth in the following description in order to explain the methodologies of the present disclosure. The methodologies may pertain to further use cases in a similar manner as well.

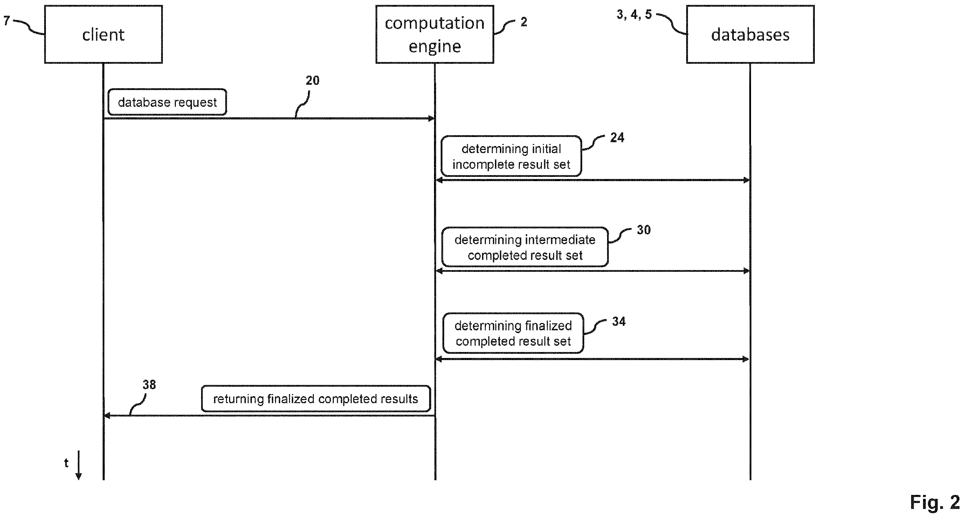

With continued reference to FIG. 1 and additional reference to FIG. 2, computations of the computation engine 2 in order to prepare a database response for a received database request 20 occur in an incremental manner over multiple processing stages.

At a first stage, in activity 24, the computation engine 2 determines, based on an initial result database 3, an initial incomplete result set with a number of results which include static data pieces that correspond to the at least one search parameter indicated in the database request 20. Hence, as visualized by FIG. 2, determining the initial incomplete result set may data exchange with the initial result database 3. The data retrieved from the initial result database 3 is generally static in the sense that e.g. the static data is updated less often than dynamic data and/or relates to static characteristics. An example of static data pieces are nodes of a communication network and routes between the nodes, while current technical characteristics of the routes between the nodes such as current bit rates vary dynamically and are therefore denoted as dynamic data pieces herein.

Determining the initial incomplete result set (activity 24) may further comprise processing static data of the initial result database 3 by way of database operations such as select, join, union, intersect, order, group, and other functions, in order to establish the static data pieces of the initial incomplete result set on the basis of static data held by the initial result database 3. These database operations may be executed at the computation engine 2 and/or the initial result database 3.

Further, the initial incomplete result set is referred to as initial and incomplete herein as not yet all of the data sought by the database request 20 has been computed at this point. More specifically, determining the initial incomplete result set may include generating a number of data records ("results"), each of the data records having a number of data fields (also referred to as columns or information elements). Some of the data fields relate to static data and are filled with the static data pieces, while other fields of the data records relate to dynamic data and are therefore not yet filled at the first stage. Hence, in this sense, the result set generated at the first stage is initial and still incomplete as the dynamic data pieces have not yet computed and is to be added subsequently.

At a second stage, the computation engine 2 computes at least one dynamic data piece for each result in the initial incomplete result set based on a number of dynamic computation rules. Computing the dynamic data pieces for the results may include a number of sub-activities such as retrieving the rules for computing the dynamic data pieces from a computation rules database 4. The rules may enable the computation engine 2 to dynamically calculate dynamic data pieces corresponding to the static data pieces at request-time. Optionally, the dynamic data pieces may be additionally calculated based on dynamic data which may be held by a dynamic database 5 of the database system 1. The calculation of the dynamic data pieces may involve similar database operations as mentioned above with reference to the first stage.

The computation engine 2 thereby obtains and determines an intermediate completed result set (activity 30). The term "completed" refers to the fact that each result of the intermediate completed result set includes the at least one static data piece and the computed at least one dynamic data piece, i.e. the above-mentioned data fields of the data records of the result set are now filled with the dynamic data pieces as well. Note that the intermediate completed result set may, at least tentatively, include less results than the initial incomplete result set as, for example, results with dynamic data pieces that do not fulfil search parameters indicated in the database request 20 may be preliminarily discarded by the computation engine at the second stage. Hence, the intermediate completed result set may be reduced in terms of the number of results compared with the initial incomplete result set.

However, it is noted that the adjustment of the third stage as described further below may also render such results that are tentatively discarded at the second stage again eligible, e.g. in line with search parameters indicated in the database request 20. Hence, generally, no results are finally discarded at the second stage already, if adjustments of the third stage are still conducted.

At a third stage, in activity 34, the computation engine 2 determines a finalized completed result set by computing an adjustment of the at least one dynamic data piece for at least a subset of the intermediate completed result set based on a number of adjustment computation rules. The adjustments may change and/or invalidate any one of the dynamic data pieces in accordance with the adjustment computation rules. The adjustment computation rules may additional take into account current settings or configurations which have not yet been reflected by the computation rules employed at the second stage. Hence, the adjustment of the third stage may render result of the intermediate completed result set to become inconsistent with the search parameters indicated by the database request 20, which are then finally excluded from the result set at the third stage, or to become consistent again with the search parameters indicated by the database request 20. These results with static data pieces and dynamic data pieces fulfilling the search parameters indicated by the database request 20 form a finalized completed result set.

Finally, with activity 38, the computation engine 2 returns at least a subset of the finalized completed result set to the client 7. The computation engine 2 may return the entire finalized completed result set or one or more individual results of the finalized completed result set, for example a given number of results which fulfil the search parameters indicated by the database request 20 to a best extent (e.g. are closest to threshold values indicated by the database request).

The one or more clients 7 of the database system 1 are, for example, computerized stations comprising hardware and software elements such as personal computers, mobile computers such as laptops or tablet computers, mobile phones such as smartphones, server systems, as well as software components such as applications running on one or more of the aforementioned computerized stations, as well as combinations thereof.

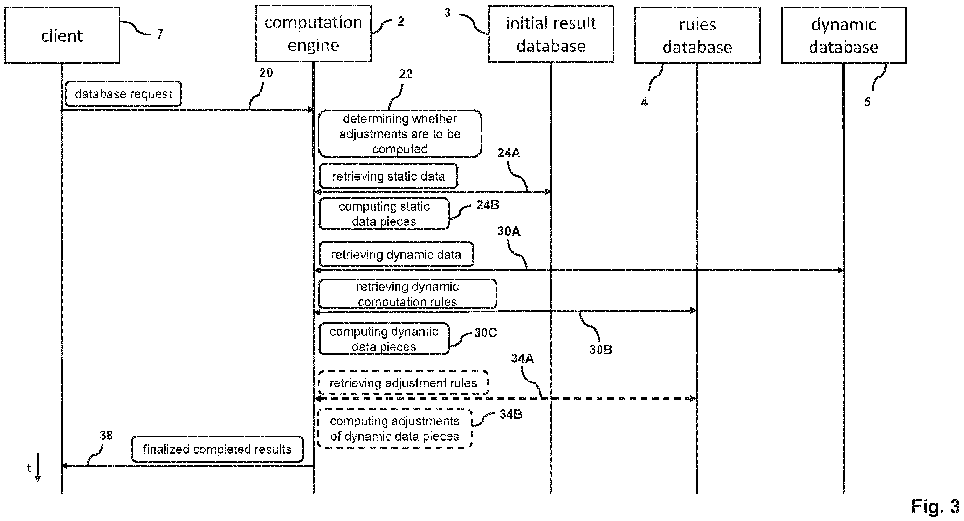

A more refined implementation variant of database request processing by the computation engine is shown by FIG. 3. Such refined implementation variants may include an additional determining whether or not the third stage of adjustment is to be employed. Depending on the outcome of this determination, the third stage of adjusting dynamic data pieces is performed or not. Hence, the computation engine 2 does not need to perform the third stage in each and every instance.

As described above with reference to FIG. 2, the processing sequence of FIG. 3 starts with the computation engine 2 receiving a database request 20 from one of the clients 7. In response to receiving the database request 20 and on the basis of the at least one search parameter indicated by the database request 20, the computation engine 2 then determines whether or not the adjustment of the at least one dynamic data piece is to be computed (activity 22). For example, the database request 20 may explicitly indicate as one of the search parameters that no adjustment of dynamic data pieces is required for the client 7. The indication may also be present implicitly, e.g. by search parameters referring to threshold values or ranges for which an adjustment is not applicable. Furthermore, the computation engine 2 may also base the determination (activity 22) on the static data pieces computed in first stage and/or on the dynamic data pieces computed at the second stage, i.e. indirectly based on the search parameters indicated by the database request 20. Accordingly, the determination of activity 22 may take place after determining the initial incomplete result set (activity 24) and/or after determining the completed intermediate result set (activity 30).

If determining (activity 22) is affirmative, the computation engine 2 computes 30 the adjustment of the at least one dynamic data piece (activity 30). Otherwise, i.e. if the computation engine skips computing the adjustment of the at least one dynamic data piece (visualized by the dotted elements 34A, 34B in FIG. 3). In this case, the intermediate completed result set logically becomes the finalized completed result set and, accordingly, the computation engine 2 returns at least one result of the intermediate completed result set to the client 7 as the final response to the database request 20.

In addition to the determination whether or not the third stage of adjusting dynamic data pieces is to be performed (activity 22), FIG. 3 shows the processing procedure of some embodiments at a higher granularity. That is, determining the initial incomplete result set (activity 24) may include multiple sub-activities such as first retrieving underlying static data from the initial result database 3 (activity 24A) and then subsequently computing static pieces of results for the response to the database request 20 based on the retrieved static data (activity 24B). Determining the intermediate completed result set (activity 30) may include retrieving dynamic data from the dynamic database 5 (activity 30A), retrieving dynamic computation rules from the rules database 4 (activity 30B), and computing the dynamic data pieces of the results of the initial incomplete result set based on the retrieved dynamic data and the retrieved dynamic computation rules (activity 30C). Determining the finalized completed result set (activity 34) may include retrieving adjustment rules from the rules database 4 (activity 34A) and computing the adjustments of at least one dynamic data piece of at least one result of the intermediate completed result set (activity 34B). Note that the retrieval activities 24A, 30A, 30B, 34A may also be performed in a combined manner, i.e. by way of a common retrieval request to the databases 3, 4, 5.

The initial result database 3, the rules database 4 and the dynamic database 5 may be implemented in an appropriate manner depending on the particular use case. For example, the databases 3, 4, 5 may be implemented by a common database server, i.e. a combined database sub-system. In some use cases, the static data of the initial result database 3 and the dynamic data of the dynamic database 5 are held in a common database, while the rules database 4 may be a separate database sub-system. In some use cases, the rules database 4 may also be subdivided into two separate sub-systems, a sub-database holding the dynamic computation rules for computing the dynamic data pieces (activity 30C) and another sub-database holding the adjustment computation rules for computing the adjustments of dynamic data pieces (activity 34B).

In some embodiments, the computation engine 2 is configured to compute network routes between network nodes in one or more communication networks. In these embodiments, the database request is a routing request for network routes from an origin network node to a destination network node of the network nodes indicated in the routing request. In these embodiments, processing routing requests in accordance with the methodologies described above facilitates an efficient network route selection.

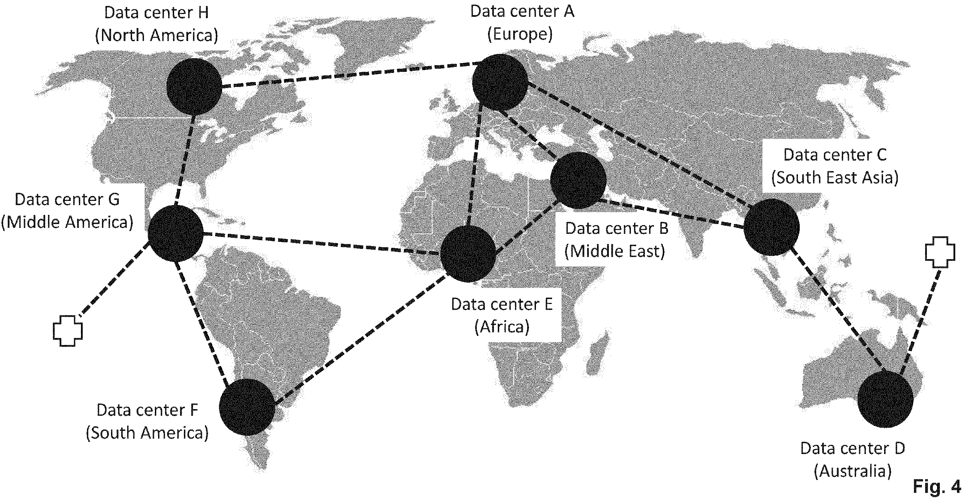

This exemplary use case of the database request relating to network routing processing will now be described in more detail with reference to FIGS. 4 to 6. This use case relates to a database request for determining a network route through a global communication network connecting a number of data centers. FIG. 4 shows a simplified example of such network with eight data centers in different parts of the world. A client 7 also connected to this network may be a backup server of a company which requests a network route to a particular data center in order to conduct an online backup of a significant amount of data such as several hundred or thousands of Gigabytes. A client 7 may also be one of the data centers itself which e.g. needs to store a (partial) copy of its own database at a second data center for reasons of redundancy.

For example, the data center C in South East Asia may want to mirror a particular portion of its data in the data center G located in Middle America. Data center C may thus send a request for a network route (database request; briefly: routing request) to data center G to the computation engine 2. The request may include the origin and destination data center as well as further search parameters such as a desired bandwidth, a certain time slot for the backup to be performed, as well as further quality-of-service parameters and security parameters such as whether a certain level of encryption is requested for the data transmission to data center G.

In response to receiving the routing request, the computation engine 2 proceeds in the manner as explained at a more general level above. Hence, at the first stage, the computation engine 2 determines the initial incomplete result set. In the exemplary use case of FIGS. 4 to 6, the initial incomplete result set is given by the network routes ("results") from the origin data center to the destination data center. In order to determine these network routes, the computation engine 2 accesses the initial result database 3 which stores an inventory of network legs connecting two neighbouring data centers.

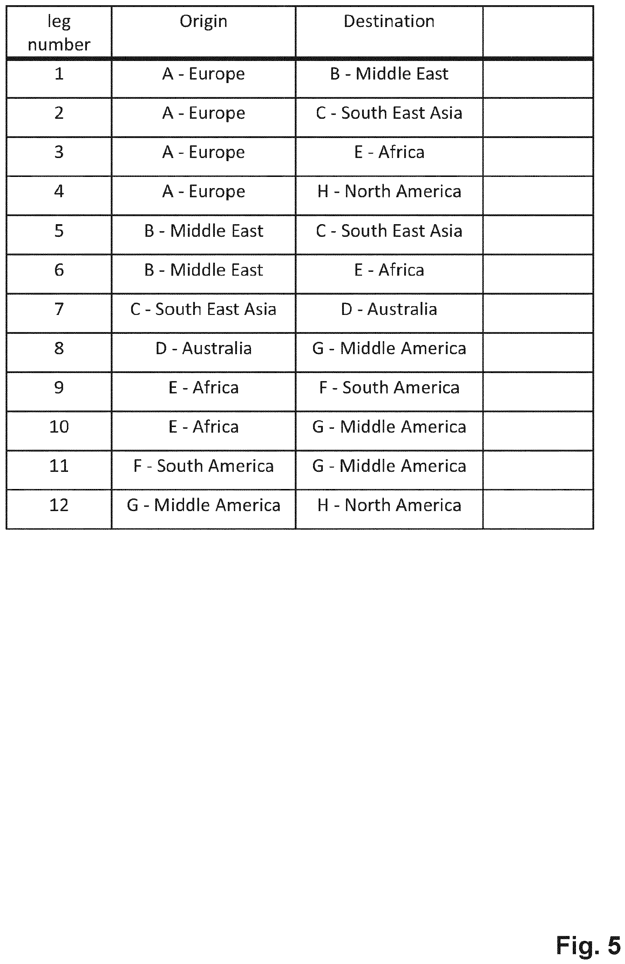

These network legs constitute static data as the general only change when the layout of the communication network is changed, e.g. a new data center or an additional network leg between existing data centers is added (FIG. 5). The computation engine 2 processes the network legs retrieved from the initial result database 3 and establishes an initial incomplete result set in accordance with the search parameters indicated in the routing request, in particular the origin data center and the destination data center. Hence, for the present network routing embodiments, the initial incomplete result set includes a number of network routes from the origin network node to the destination network node, and the static data pieces of the results in the initial incomplete result set comprise intermediate network nodes of the number of network routes and identifiers (routes a, b, c, etc.) respectively identifying the network routes of the initial incomplete result set.

In the aforementioned example of a data transmission from data center C to data center G, the computation engine 2 retrieves the network leg data records from the initial result database 3 in order to calculate network routes which generally connect data centers C and G, i.e. the initial incomplete result set. In the present example, the initial incomplete results set may be given by the following data records with data fields denoting the route and associated network legs respectively connecting two network nodes / data centers:

| | |
|---|---|
| Route a: | Leg 7 - Leg 8 |
| Route b: | Leg 2 -Leg 4 - Leg 12 |
| Route c: | Leg 5 - Leg 6 - Leg 10 |
| Route d: | Leg 2 - Leg 3 - Leg 10 |

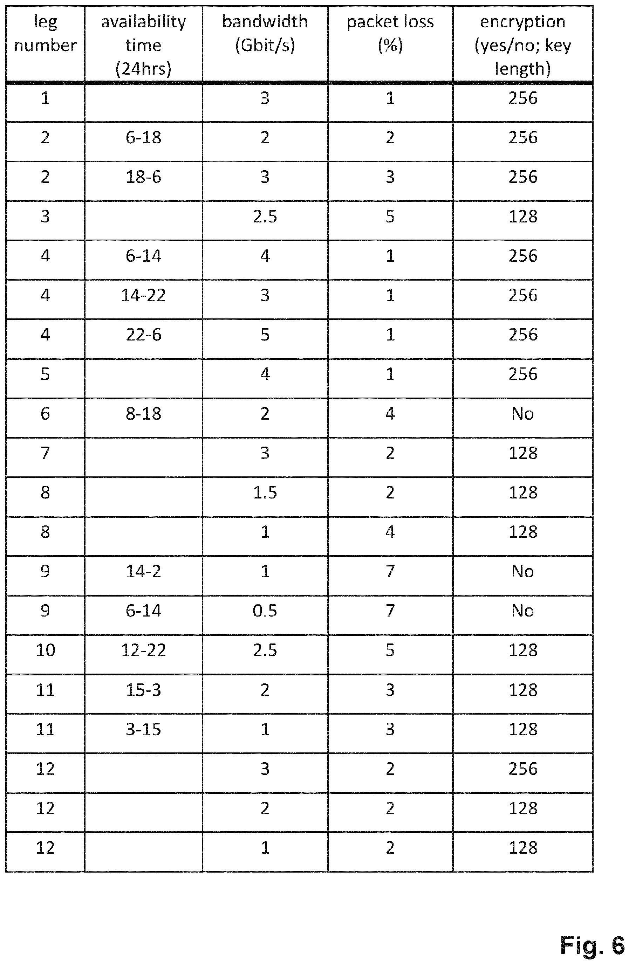

At the second stage, the initial incomplete result set of the number of generally available network routes is supplemented by dynamic data pieces which is dynamically computed at the time of the routing request by way of dynamic computation rules and dynamic data. In the present example, the dynamic data pieces relate to technical characteristics of the network legs which may be regularly updated e.g. by the network operator of the respective network leg, such as availability times, bandwidth, packet loss, and encryption technology (FIG. 6). The rules may prescribe further dynamically changing requirements, such as a minimum bandwidth limit that is to be met if the amount of data to be transmitted exceeds a given threshold. For example, a rule may prescribe that the bandwidth of the overall network route needs to be at least 2 Gbit/s if the amount of data to be transmitted is 2000 Gigabytes or more, in order to avoid congesting slower parts of the global communication networks with substantial backup traffic.

In order to determine the completed intermediate result set, the computation engine 2 retrieves the applicable (i.e. relevant for the results of the incomplete initial result set) rules and respective dynamic data from the computation rules database 4 (FIG. 6) and the dynamic database 5, respectively. The computation engine 2 then applies the rules and matches the dynamic data against the search parameters indicated in the routing request. For example, the routing request indicates that the mirroring to data center G is expected to involve a transmission of 3000 Gigabytes, is to be protected at least by a 128-bit encryption and is to be performed in the current timeframe of 20-22hrs. Based on the exemplary rules and the dynamic data, the computation engine 2 determines that route a is not eligible because the bandwidth of leg 8 is insufficient to meet the 2 Gbit/s requirement prescribed by the above-mentioned rule. Hence, route a is tentatively discarded from the result set. Also route c is to be tentatively excluded because leg 6 is not available during the requested time slot and, in addition, would not facilitate the required encryption standard. Hence, the intermediate completed result set is given by the following data records with additional data fields for dynamic data such as bandwidth and encryption standard:

| | |
|---|---|
| Route b: | Leg 2 - Leg 4 - Leg 12; 3 Gbit/s; 256-bit encryption |

| | |
|---|---|
| Route d: | Leg 2 - Leg 3 - Leg 10; 2.5 Gbit/s; 128-bit encryption |

At the third stage, the computation engine 2 determines the finalized completed result set by checking whether and how the results of the completed intermediate result set are to be adjusted. In the present example, the computation engine may check a current actual availability of network legs / network nodes and/or current actual technical characteristics of network legs / network nodes. For example, operators of the network legs may make corresponding current actual adjustment data ("adjustment rules") available at a central adjustment database (which then logically forms a part of the rules database 4) which may be queried by the computation engine 2 in order to retrieve the current adjustment data.

For example, data center E in Africa may currently be subject to an unexpected service restriction that reduces the bandwidth for network leg 10 offered during the current timeframe of 20-22hrs down to 0.5 Gbit/s. On the other hand, the data center D in Australia may experience a temporary shortage of usual network traffic and has therefore issued a special offer of an increased bandwidth of 3 Gbit/s for network leg 8. Hence, the finalized completed result set still renders eligible route a, but finally excludes route d:

| | |
|---|---|
| Route a: | Leg 7 - Leg 8; 3 Gbit/s; 128-bit encryption |
| Route b: | Leg 2 - Leg 4 - Leg 12; 3 Gbit/s; 256-bit encryption |

The computation engine 2 then returns the two routes a and b with their corresponding technical characteristics to the requesting client 7. The client 7 is then able to select one of the two routes to be used for the actual data backup according to the technical preferences of the client 7. The client 7 may then transmit a selection message to the computation engine 2 in order to reserve one of the network routes.

It is understood that the dynamic data pieces of the aforementioned specific example are of exemplary nature. The network routes and network legs may be specified by further/other network-technology-related parameters. For example, the at least one dynamic data piece may include at least one of a quality-of-service parameter specifying a quality of service of each of the number of network routes, an availability parameter specifying availability times of each of the number of network routes, network provider parameters specifying network-provider-specific technical parameters for each of the number of network routes. The quality-of-service parameter may e.g. include one or more of a bit rate, a throughput, transmission security features, free bandwidth, a bit error rate, a transmission delay, a time until completion of a transmission of a given amount of data, and others.

The non-limiting example of FIGS. 4 to 6 illustrate some of the technical improvements of the present methodologies. For example, the three-staged complete processing of the database request avoids a back-and-forth communication between the client 7 and the computation engine 2 involving one or more follow-up requests which consume response time and network resources. Hence, the communication protocol to be employed at the database layer between the client 7 and the computation engine 2 is simplified. The present mechanism also promotes efficient database retrieval in terms of findability. As exemplarily shown by the specific aforementioned example, performing the adjustment of the third stage before returning the results to the client may avoid excluding results from the finalized result set (here: route a) although the particular request actually fulfills the search parameters and rules of the database system 1.

The present methodologies are also applicable to further use cases which likewise employ a dynamic computation of dynamic data pieces at request time, such as current availability determinations, and may likewise still adjust the dynamically computed dynamic data due to current exceptional configurations. Hence, similar technical benefits as described above (avoiding back-and-forth request-response messages, simplified database protocol, improved database retrieval in terms of findability) for the use case of network routing can be achieved by any engine operating according to the present methodologies.

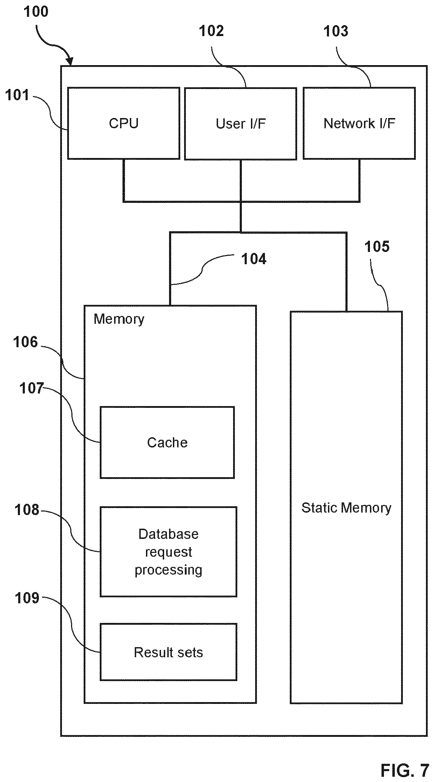

FIG. 7 is a diagrammatic representation of the internal component of a computing machine 100 implementing the functionality of the computation engine 2. Similar computing machines may also realize one or more of the clients 7, as well as the databases 3, 4, 5 described above. The computing machine 100 includes a set of instructions to cause the computing machine 100 to perform any of the methodologies discussed herein when executed by the computing machine 100. The computing machine 100 includes at least one processor 101, a main memory 106 and a network interface device 103 which communicate with each other via a bus 104. Optionally, the computing machine 100 may further include a static memory 105 and a disk-drive unit. A video display, an alpha-numeric input device and a cursor control device may be provided as examples of user interface 102. The network interface device 103 connects the computing machine 100 implementing the computation engine 2 to the other components of the database system 1 such as the clients 7 and the databases 3, 4, 5, or any further components.

Computing machine 100 includes a memory 106 such as main memory, random access memory (RAM) and/or any further volatile memory. The memory 106 may store temporary data and program data to facilitate the functionality of the computation engine 2. For example, the computation engine 2 may maintain a cache 107 storing data recently retrieved from the databases 3, 4, 5. The memory 106 may also store computer program data 108 to implement the database request processing as explained above. The memory 106 may also temporarily store the data 109 constituting the initial incomplete result set, the intermediate completed result set and/or the finalized completed result set during the processing of the computation engine 2 and/or after results of the finalized completed result set have been returned to the client 7, e.g. to keep the data readily available for potential follow-up requests such as the aforementioned network route selection message.

A set of computer-executable instructions (computer program code 108) embodying any one, or all, of the methodologies described herein, resides completely, or at least partially, in or on a machine-readable storage medium, e.g., the memory 106. For example, the instructions 108 may include software processes implementing the database request processing functionality of the computation engine 2. The instructions 108 may also implement the functionality of receiving and responding to database requests from the clients 7, as well as querying the databases 3, 4, 5 and retrieving data records and rules from the databases 3, 4, 5.

The instructions 108 may further be transmitted or received as a propagated signal via the Internet through the network interface device 103 or via the user interface 102. Communication within computing machine is performed via a bus 104. Basic operation of the computing machine 100 is controlled by an operating system which is also located in the memory 106, the at least one processor 101 and/or the static memory 105.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicants general inventive concept.

## Claims

1. A method for dynamically computing results in response to database requests performed by a computation engine, the method comprising:
- receiving a database request from a client, the database request indicating at least one search parameter;
- determining, based on an initial result database, an initial incomplete result set with a number of results which include static data pieces that correspond to the at least one search parameter;
- computing at least one dynamic data piece for each result in the initial incomplete result set based on a number of dynamic computation rules, thereby obtaining an intermediate completed result set, wherein each result of the intermediate completed result set includes the at least one static data piece and the computed at least one dynamic data piece;
- computing an adjustment of the at least one dynamic data piece for at least a subset of the intermediate completed result set based on a number of adjustment computation rules, thereby obtaining a finalized completed result set;
- returning at least a subset of the finalized completed result set to the client.

2. The method of claim 1, further comprising:
- determining, in response to receiving the database request and on the basis of the at least one search parameter, whether or not the adjustment of the at least one dynamic data piece is to be computed;
- if affirmative, computing the adjustment of the at least one dynamic data piece;
- otherwise, skipping computing the adjustment of the at least one dynamic data piece and returning at least one result of the intermediate completed result set to the client.

3. The method of claim 1 or claim 2, wherein the computation engine is configured to compute network routes between network nodes in one or more communication networks, and wherein the database request is a routing request for network routes from an origin network node to a destination network node of the network nodes indicated in the routing request.

4. The method of claim 3, wherein the initial incomplete result set includes a number of network routes from the origin network node to the destination network, and the static data pieces comprise intermediate network nodes of the number of network routes and identifiers respectively identifying the network routes of the initial incomplete result set.

5. The method of claim 4, wherein the at least one dynamic data piece comprises at least one of a quality-of-service parameter specifying a quality of service of each of the number of network routes, an availability parameter specifying availability times of each of the number of network routes, network provider parameters specifying network-provider-specific technical parameters for each of the number of network routes.

6. The method of claim 5, wherein the quality-of-service parameter comprises one or more of a bit rate, a throughput, transmission security features, free bandwidth, a bit error rate, a transmission delay, a time until completion of a transmission of a given amount of data.

7. A computation engine for dynamically computing results in response to database requests, wherein the computation engine is arranged to:
- receive a database request from a client, the database request indicating at least one search parameter;
- determine, based on an initial result database, an initial incomplete result set with a number of results which include static data pieces that correspond to the at least one search parameter;
- compute at least one dynamic data piece for each result in the initial incomplete result set based on a number of dynamic computation rules, thereby obtaining an intermediate completed result set, wherein each result of the intermediate completed result set includes the at least one static data piece and the computed at least one dynamic data piece;
- compute an adjustment of the at least one dynamic data piece for at least a subset of the intermediate completed result set based on a number of adjustment computation rules, thereby obtaining a finalized completed result set;
- return at least a subset of the finalized completed result set to the client.

8. The computation engine of claim 7, being further arranged to perform the method of any one of claims 2 to 6.

9. A computer program comprising computer program code which, when executed by a computer, causes the computer to perform the method of any one of claims 1 to 6.
